Europäisches Patentamt

European Patent Office

Office européen des brevets

(11) Publication number: **0 114 673**
**B1**

## EUROPEAN PATENT SPECIFICATION

Ⓔ Date of publication of patent specification: **30.03.88**

(21) Application number: **84100553.1**

(22) Date of filing: **19.01.84**

(51) Int. Cl.⁴: **B 60 K 26/02**

(54) Acceleration control device for users with lower limbs physical disabilities.

(30) Priority: **24.01.83 IT 1924483**

(43) Date of publication of application:
**01.08.84 Bulletin 84/31**

(45) Publication of the grant of the patent:
**30.03.88 Bulletin 88/13**

(84) Designated Contracting States:
**AT BE CH DE FR GB IT LI LU NL SE**

(56) References cited:
**DE-A-2 841 786**

(73) Proprietor: **Gianini, Bruno**
**Via Riviera N. 61**
**I-27100 Pavia (IT)**

(72) Inventor: **Gianini, Bruno**
**Via Riviera N. 61**
**I-27100 Pavia (IT)**

(74) Representative: **Bianchetti, Giuseppe**
**Studio Consulenza Brevettuale Via Rossini, 8**
**I-20122 Milan (IT)**

Courier Press, Leamington Spa, England.

## Description

The invention relates to an acceleration control device for motorcars intended for people deprived of the use of the lower limbs, comprising a handwheel mounted coaxially above the steering wheel, which is fixed to a steering column, and constrained for rotary motion with said steering wheel, but capable of shifting axially to it, the handwheel being supported by rods which pass through holes provided in the radial arms of the steering wheel and which are fixed to an element located underneath the steering wheel, which element moves axially a further rod for controlling the acceleration of the motorcar.

An acceleration control device of this type, according to the first part of claim 1, is known from DE—A—2.841.786. In such a device, the element moving the rod for controlling the acceleration consists of a plate mounted in a ball bearing, to the lower race of which is fixed the upper end of said rod.

This arrangement is expensive and makes it difficult the assembly and disassembly of the device.

Furthermore, the handwheel of such a device needs to be operated, preferably, with both hands, as an operation with one hand only should arise eccentric stresses on the handwheel, such as to hinder its axial shift. The acceleration control device, according to the invention, overcomes the above drawbacks, as it is very cheap, readily assemblable and disassemblable, space saving, and thanks to the guide system it incorporates, may be operated even with one hand only, acting on its handwheel. To obtain these objects, it is according to the invention proposed an acceleration control device as given in the preamble, characterized in that said element moving a rod for controlling the acceleration of the motorcar is a ring mounted around a hub which is fixed to the steering column and in that said further rod is not connected to said ring, the handwheel carrying axially a cylindrical pin which fits into an elongated hollow nut fixed to the steering column, inside the hub.

With such an arrangement, the handwheel may be operated even with one hand only, without arising eccentric stresses, as the cylindric pin and the hollow nut constitutes a further guide means, in addition to the ring surrounding the hub.

Furthermore, as the further rod is not connected to the ring, the device may be easily assembled and disassembled. In particular, the hub, the steering wheel, the handwheel and the ring, form a single group which may be removed as a whole from the steering column (4).

According to a preferred embodiment of the invention, said rod is a biro-like rod and has a ball-point constantly in contact with a lower flat wall of said ring. The control of the acceleration takes place by the movement of said ring, which shifts the biro-like rod that, in turn, puts into traction a wire connected either to the accelerator pedal or directly to the motorcar carburettor. Said wire may be obviously replaced by analogous devices, such as rods, bars, etc.

Further characteristics of the invention shall be made clearer by the following detailed description, which relates to a solution merely suggested by way of example and by no means limitative, illustrated in the attached only drawing, wherein:

Figure 1 shows the axonometry and vertical section of the accelerator control device according to the present invention;

Figure 2 is an axial section of the device shown in Figure 1.

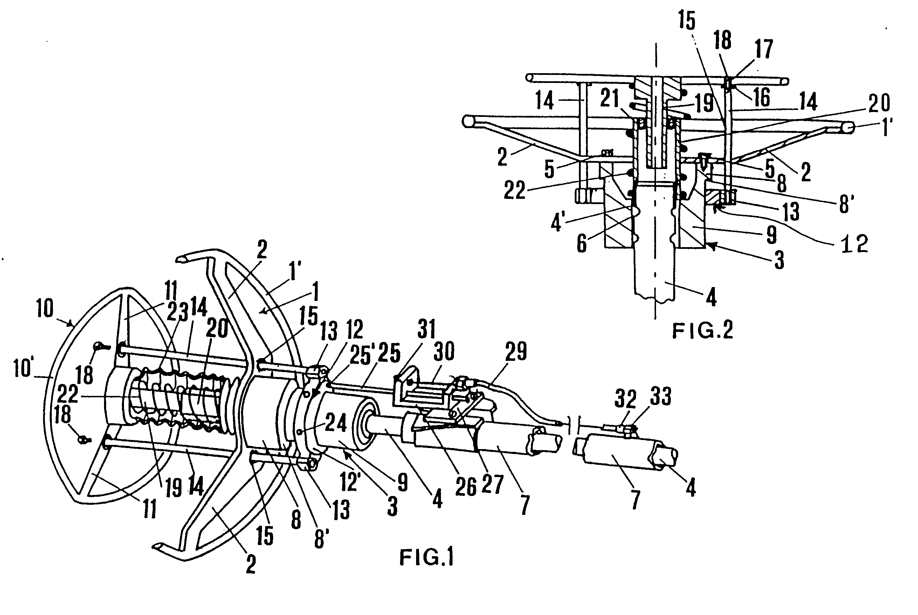

Concerning the above mentioned figures, the reference number 1 indicates the real steering wheel, in the following referred to as the steering wheel, made up by a peripheral ring 1' supported by the radial arms 2. In the example, there are three radial arms, and only two of them are visible in the figure. The steering wheel 1 is commonly mounted on a hub 3, from which a steering column 4 goes off that transmits to the wire-wheels the working of the steering wheel. Of course, the three elements, steering wheel, hub and steering column, are rigidly tied to one another; for instance, the former two by means of screws 5, the latter two by a toothed coupling 6 (Figure 2). The steering column 4, which revolves together with the steering wheel, is known to be covered by a sleeve 7 (Figure 1), mounted in such a way as not to undergo any rotation.

According to the invention, the steering column 3 is turned in such a way as to present contiguous cylindric frustums 8 and 9, the end frustum 9 having a shorter diameter compared with frustum 8.

Coaxially to the steering wheel 1 and, in the illustrated instance, above it, there is a control handwheel 10, which shall be referred to in the following as the handwheel, made up by a peripheral ring 10' supported by as many radial arms 11 as the arms 2 of the steering wheel 1, and perfectly aligned with them.

An important feature of the invention is the ring 12 around the frustum 9 of the steering column 3. This ring, whose function is to support and guide the handwheel, is peripherally equipped with threaded projections, such as, for instance, hexagonal nuts 13 welded to the above ring, and whose number shall be the same as the arms of the wheels. In said nuts 13 the ends of as many rods 14 are screwed which have been made pass through holes 15 made in the arms 2 of the steering wheel 1. The opposite ends of the rods 14, threaded internally, are aligned, preferably with the interposition of washers 16, with the holes 17 (Figure 2), made in the arms 11 of the handwheel, and aligned, in their turn, with the above holes 15, so that the screws 18 can fix the handwheel to the rods.

To better guide the axial shift of the handwheel 10 as to the steering wheel 1, shift which shall be explained in the following, there is another guiding device, made up by a cylindric pin 19 borne in the middle by the handwheel; the pin fits into an hexagonal nut 20, opportunely elongated and screwed to the threaded end 4' of the steering column 4 inside the hub 3 (Figure 2). To make sure that the pin 19 slide always axially in the nut 20, this last has inside, at the free end, a bush 21 (Figure 2), in anti-friction material, Teflon for instance, which adheres perfectly to the external surface of the pin. Such bush 21 may also be replaced by at least three bearings.

When mounted, around the pin 19 and the nut 20, and between the upper surface of the steering wheel 1 and the bottom surface of the handwheel 10, there is a thrust spring 22 which, when at rest, allows for the maximum distance between the wheels; said distance is determined by the stop shot of the ring 12, made up by the step 8' between the trunks 8 and 9 of the hub 3.

The spring 22 is covered by a rubber bellows 23 whose vertical section is shown in Figure 1.

In order to make up for the working tolerances and to prevent any clearances in the sliding of the ring 12 on the hub trunk 9, there are around the ring several adjustable pins 24 (Figure 1) in anti-friction material, Teflon for instance, which pass through the depth of the ring and adhere to the external surface of the trunk 9.

The mechanism which allows for the motorcar acceleration is described in the following, wherein reference is made to the example shown in Figure 1.

The sliding of the ring 12 on the trunk 9 is obtained by keeping hold of the steering wheel 1 with both hands, and pushing downwards, for instance with the thumb, the handwheel 10. The flat part 12' of the ring 12, which is always in contact with the ball-point 25' of a biro-like rod 25, which slides into aligned holes made in a support stirrup 26, connected by means of a support plate 27 to the sleeve 7 of the steering column 4, permits the axial shift of said rod.

The end of the rod 25, coming out of the stirrup 26, keeps constrained the sheath 29 of a steel wire 30, whose end 31 is restrained by a wing of said stirrup 26, while the other end, non visible in the figure, controls either the accelerator pedal or directly the motorcar carburettor. The other end 32 of the sheath 29 is kept fast by a stop nut 33 borne by the sleeve 7.

It is clear that in this way, if the ends of the sheath 29 go up or away with respect to one another as a consequence of the axial shift of the rod 25, said shift of the ends brings about either the going up or away of the gear connected to the non visible end of the wire 30, so that the expected acceleration control is obtained.

The rod 25 has a ball-point (25') in order to avoid any friction on the flat wall 12' of the ring 12 during the rotation of this last, as it forms and integral whole with the steering unit.

As shown in the figures, the control device of the invention is very economical, as it is made up by few low-cost pieces, has a minimum encumbrance and may be easily controlled in any driving situations, even with one only hand operating on the handwheel 10; this last may also be free-wheel mounted by means of three bearings at least.

In fact, thanks to the double guide systems made up by the ring 12 sliding around the trunk 9 of the hub 3 and the pin 19 borne by the handwheel and sliding inside the nut 20 fixed to the steering wheel, one can operate the handwheel 10 even with the thumb only of the hand which, at the same time, keeps hold of the steering wheel 1, without any danger of off-centering the handwheel sliding which would hinder the shift.

**Claims**

1. An acceleration control device for motorcars intended for people deprived of the use of the lower limbs, comprising a handwheel (10) mounted coaxially above the steering wheel (1), which is fixed to the steering column (4), and constrained for rotary motion with said steering wheel (1), but capable of shifting axially to it, the handwheel (10) being supported by rods (14) which pass through holes (15) provided in the radial arms (2) of the steering wheel (1) and which are fixed to an element (12) located underneath the steering wheel (1), which element (12) moves axially a further rod (25) for controlling the acceleration of the motorcar, characterized in that said element (12) is a ring mounted around a hub (3) which is fixed to the steering column (4), and in that said further rod (25) is not connected to the ring (12), the handwheel (10) carrying axially a cylindrical pin (19) which fits into an elongated hollow nut (20) fixed to the steering column (4) inside the hub (3).

2. An acceleration control device according to claim 1, characterized in that said further rod (25) has a ball-point (25') constantly in contact with a lower flat wall (12') of said ring (12).

3. An acceleration control device according to claim 2, characterized in that said further rod (25) slides into holes provided in a support stirrup (26) which is tied up to a fixed sleeve (7) surrounding the steering column (4), acts, with its lower end, against a sheath (29) of a steel wire (30), connected to the accelerator pedal or directly to the motorcar carburettor.

4. An acceleration control device according to any one of the claims 1 to 3, characterized in that a thrust spring (22) is located around said cylindric pin (19) and said hollow nut (20), the thrust spring (22) acting against the steering wheel (1) and the handwheel (10).

5. An acceleration control device according to any one of claims 1 to 4, characterized in that the hub (3), the steering wheel (1), the handwheel (10) and the ring (12), form a single group which may be removed from the steering column (4).

**Patentansprüche**

1. Beschleunigungskontrollvorrichtung für Kraftfahrzeuge, für Personen vorgesehen, die ihre unteren Gliedmaßen nicht gebrauchen können, umfassend ein Handrad (10), das koaxial über dem Lenkrad (1) montiert ist, welches an der Steuersäule (4) fixiert ist, zur zwangsläufigen Drehbewegung mit dem Lenkrad (1), jedoch fähig, sich axial zu diesem zu verschieben, wobei das Handrad (10) durch Stangen (14) gestützt ist, die durch Löcher (15) hindurch verlaufen, die in den radialen Armen (2) des Lenkrades (1) vorgesehen sind, und die an ein Element (12) fixiert sind, das unterhalb des Lenkrades (1) angeordnet ist, wobei das Element (12) axial eine weitere Stange (25) zum Regeln der Beschleunigung des Kraftfahrzeuges bewegt, dadurch gekennzeichnet, daß das Element (12) aus einem Ring besteht, der um eine Nabe (3) herum angebracht ist, die an der Steuersäule (4) fixiert ist, und daß die weitere Stange (25) mit dem Ring (12) nicht verbunden ist, wobei das Handrad (10) axial einen zylindrischen Stift (19) trägt, der in eine längliche, hohle Mutter (20) paßt, die an der Steuersäule (4) innerhalb der Nabe (3) fixiert ist.

2. Beschleunigungskontrollvorrichtung nach Anspruch 1, dadurch gekennzeichnet, daß die weitere Stange (25) eine Kugelkuppe (25') aufweist, die mit einer unteren, flachen Wand (12') des Ringes (12) konstant in Kontakt ist.

3. Beschleunigungskontrollvorrichtung nach Anspruch 2, dadurch gekennzeichnet, daß die weitere Stange (25) in Löcher hinein gleitet, die in einem U-förmigen Stützhalter (26) vorgesehen sind, der an einer fixierten Hülse (7) befestigt ist, welche die Steuersäule (4) umgibt, mit ihrem unteren Ende gegen eine Hülle (29) eines Stahldrahtes (30) wirkt, der mit dem Beschleunigerpedal oder direkt mit dem Kraftfahrzeug-Vergaser verbunden ist.

4. Beschleunigungskontrollvorrichtung nach einem der Ansprüche 1 bis 3, dadurch gekennzeichnet, daß eine Schubfeder (22) um den zylindrischen Stift (19) und die hohle Mutter (20) herum angeordnet ist, wobei die Schubfeder (22) gegen das Lenkrad (1) und das Handrad (10) wirksam ist.

5. Beschleunigungskontrollvorrichtung nach einem der Ansprüche 1 bis 4, dadurch gekennzeichnet, daß die Nabe (3), das Lenkrad (1), das Handrad (10) und der Ring (12) eine einzelne Gruppe bilden, die von der Steuersäule (4) her entfernt werden kann.

## Revendications

1. Dispositif de commande d'accélération pour véhicules à moteur destinés à des personnes privées de l'usage des membres inférieurs, comprenant une roue à main (10) montée co-axialement au-dessus du volant de direction (1), qui est fixée sur la colonne de direction (4) maintenue en rotation avec ledit volant (1) de direction mais apte à se déplacer axialement par rapport à celui-ci, la roue à main (10) étant soutenue par des tiges (14) qui s'étendent à travers des trous (15) prévus dans les branches radiales (2) du bolant de direction (1) et qui sont fixées sur un organe (12) disposée au-dessous du volant de direction (1), cet organe (12) déplaçant axialement une autre tige (25) pour commander l'accélération du véhicule à moteur, caractérisé en ce que ledit organe (12) est une bague montée autour d'un moyeu (3) qui est fixé sur la colonne de direction (4), et en ce que ladite autre tige (25) n'est pas reliée à la bague (12), la roue à main (10) portant axialement une broche cylindrique (19) qui s'ajuste dans une noix creuse allongée (20) fixée sur la colonne de direction (4) à l'intérieur du moyen (3).

2. Dispositif de commande d'accélération suivant la revendication 1, caractérisé en ce que ladite autre tige (25) comporte une pointe à bille (25') en contact constant avec une paroi inférieure plate (12') de ladite bague (12).

3. Dispositif de commande d'accélération suivant la revendication 2, caractérisé en ce que ladite autre tige (25) coulisse dans des trous prévus dans un étrier de support (26) qui est lié à un manchon fixe (7) entourant la colonne de direction (4), et agit par son extrémité inférieure contre une gaine (29) d'un câble d'acier (30) relié à la pédale d'accélérateur ou directement au carburateur du véhicule à moteur.

4. Dispositif de commande d'accélération suivant l'une quelconque des revendications 1 à 3, caractérisé en ce qu'un ressort (22) de poussée est disposé autour de ladite broche cylindrique (19) et de ladite noix creuse (20), le ressort de poussée (22) agissant contre le volant de direction (1) et la roue à main (10).

5. Dispositif de commande d'accélération suivant l'une quelconque des revendications 1 à 4, caractérisé en ce que le moyeu (3), le volant de direction (1), la roue à main (10) et la bague (12) forment un seul groupe qui peut être retiré de la colonne de direction (4).

15
18
17
14 21 19 16 14 20
2 1'
5 5 2
22 8 8'
4' 13
6 9 12
3
4

FIG.2

2
1'
1
11 15 13 12
10 23 14 20 25' 25 31 30 29
10' 18 22 9 24 12' 3 4 26 27 7 32 33
18 18 19 14 8 8' 13 3 4 7 4
11 12'
15
2

FIG.1

0 114 673